# EUROPEAN PATENT APPLICATION

(11) **EP 1 548 723 A2**
(43) Date of publication of application: **29.06.2005**
(21) Application number: 04030721.7
(22) Date of filing: 23.12.2004
(51) Int. Cl.: G11B 7/24

(54) **Optical recording material and optical recording medium**

(30) Priority: 26.12.2003 JP 2003435518; 28.04.2004 JP 2004134046
(71) Applicant: TDK Corporation, Tokyo 103-8272 (JP)
(72) Inventor: Shinkai, Masahiro, Tokyo 103-8272 (JP); Monden, Atsushi, Tokyo 103-8272 (JP); Tanabe, Junji, Tokyo 103-8272 (JP); Tsukamoto, Shuji, Tokyo 103-8272 (JP); Horai, Takashi, Tokyo 103-8272 (JP)
(74) Representative: Grünecker, Kinkeldey, Stockmair & Schwanhäusser Anwaltssozietät

(57) **Abstract**

An optical recording material used in an optical recording medium which can record information by light irradiation, this optical recording material containing a dye compound obtained by salt formation between a chelate compound formed by coordination between one metal and one or two compounds represented by the following general formula (1): 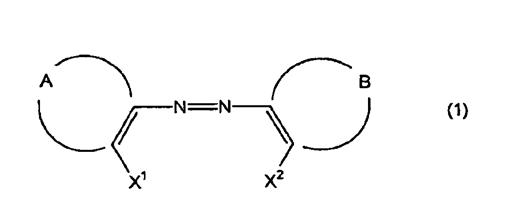 where A and B are groups of atoms which may be identical or different, and which respectively form aromatic rings, and X¹ and X² are respectively functional groups having one or more active hydrogen atoms which may contain a substituent group,
and a cation represented by the following general formula (2): 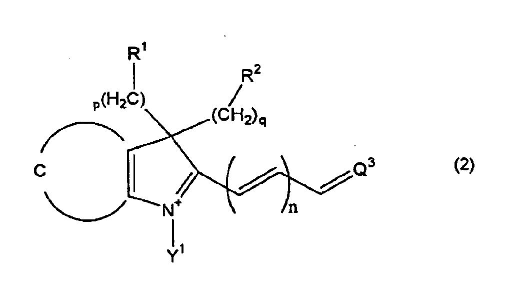 where C is a group of atoms forming a benzene ring or naphthalene ring which may have a substituent group, R¹ and R² are respectively five-membered rings or six-membered rings which may have a substituent group, Y¹ is a substituent group, Q³ is a nitrogen-containing heterocyclic ring which may have a condensed ring, p and q are respectively integers from 1 to 4, and n is an integer from 0 to 3.

## Description

### Background of the Invention

### Field of the Invention

This invention relates to an optical recording material used in an optical recording medium which records information by being irradiated with light, and to an optical recording medium.

### Related Art

At present, an optical recording medium generally records information by irradiating a recording layer with a laser, which produces a shape change, magnetic sector change or a phase change in the recording layer. This optical recording medium may for example be a tracking type optical recording medium comprising a recording layer containing an organic dye, such as for example an azo dye (e.g., Japanese Unexamined Patent Application (JP) No. 08-108623, and JP No. 08-156408, which is widely used in CD-R (tracking type compact disks) or DVD±R (tracking type digital video discs).

In recent years, there is a demand for even higher density recording media, and to respond to this demand, there is an increasing trend towards shorter recording and reproduction light wavelengths. For example, the wavelength of the recording/reproduction light currently used in CD-R is 780nm, but in next-generation CD-R and DVD±R it will be reduced to 635-680nm. In these short wavelength optical recording media, the dye used is required to have substantially identical physical properties such as light resistance and recording sensitivity with respect to recording and reproduction wavelengths to those of the current dyes. Further, as the recording layer containing the organic dye is generally applied by coating, it preferably has solubility in the coating solution solvent. However, if the organic dyes described in the aforesaid literature are used, it is difficult to achieve a satisfactory balance between all the above properties.

The Inventor therefore developed a recording medium wherein a chelate having an azo compound obtained by substituting some functional groups containing active hydrogen as ligands, was contained in the recording layer, as for example disclosed in JP No. 2000-190641 and JP No. 2000-190642.

### SUMMARY OF THE INVENTION

The salt-forming dye disclosed in JP No. 2000-190641 and JP No. 2000-190642 has excellent light resistance and good solubility in the solvents used in coating solutions, and optical recording media using this chelate compound have excellent recording and reproduction properties with respect to specific wavelengths. However, in this case, there was still room for improvement of properties.

For example, despite the aforesaid high density, it was desired to record information on the optical recording medium at higher speed, so the optical recording medium was therefore required to have high sensitivity and high response. Also, high power laser light is used for high speeds, so the medium was required to have light resistance and to be able to precisely form recording pits under the high temperature conditions of laser irradiation.

The salt-forming dye disclosed in JP No. 2000-190641 and JP No. 2000-190642 did not necessarily have sufficient solubility depending on the type of functional groups having active hydrogens. From the viewpoint of enhancing the film-forming properties of the recording layer and more reliably preventing bleed-out of the chelate compound in the recording layer, it was thus desired to further increase the solubility of the chelate compound.

It is therefore an object of this invention, which was conceived in view of the above problems, to provide a recording material which has superior, well-balanced recording/reproduction properties, light resistance and recording layer film-forming properties, and to an optical recording medium using this optical recording material.

As a result of intensive studies conducted to achieve the above object, the Inventor discovered that a chelate compound of an azo dye having a specific structure with a metal, and a cyanine dye having a specific structure, had high solubility in the recording layer coating solution while improving the recording/reproduction properties and light resistance of the optical recording medium, and thereby arrived at the present invention.

The optical recording material of the invention is an optical recording material which permits recording of information by light irradiation, and contains a chelate compound (anion) wherein one or two of the compounds represented by the following general formula (1) are coordinated with a metal, and a cation represented by the following general formula (2).

The optical recording material of the invention is an optical recording material used in an optical recording medium which can record information by light irradiation, and contains a dye compound obtained by salt formation between a chelate compound (anion) wherein one or two compounds represented by the following general formula (1) are coordinated with a metal, and a cation represented by the following general formula (2):

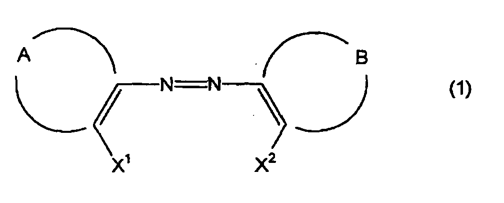

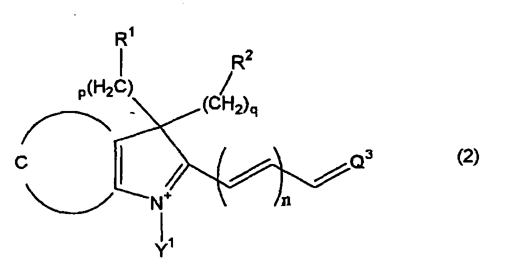

Herein, in formula (1), A and B may be identical or different, and respectively represent groups of atoms forming an aromatic ring, and X¹ and X² are functional groups respectively containing one or more active hydrogen atoms which may have a substituent group. In formula (2), C is a group of atoms forming a benzene ring or naphthalene ring which may have a substituent group, R¹ and R² are respectively five or six-membered rings which may have a substituent group, Y¹ is a substituent group, and Q³ is a nitrogen-containing heterocyclic ring which may have a condensed ring. p and q are respectively integers from 1 to 4, and n is an integer from 0 to 3. n is preferably an interger from 0 to 1 in order to obtain more excellent recording and reproduction properties.
Herein, "C" denotes a structure inside the ring in the formula (2).

Salt formation can be verified by establishing that the counter ion of the chelate compound formed by coordination of the compound represented by the above formula (1) is not contained in the optical recording material. However, the statement that "the counter ion is not contained in the optical recording medium" means that "it is not contained to the extent that the properties of the salt-forming dye are lost due to the counter ion", and does not specify whether or not the counter ion is not contained at all.

Due to the mixture of the cyanine dye having a specific structure and an azo dye having a specific structure, high-speed recording/reproduction which was impossible to achieve in the prior art can now be realized, while at the same time, recording/reproduction properties can be maintained at a high level, light resistance and solubility in the recording layer coating solution can be enhanced, and superior, well-balanced properties can be obtained.

The optical recording medium of the invention is an optical recording medium which can record information by light irradiation, and which comprises a recording layer containing an anion wherein one or two compounds represented by the general formula (1) are coordinated with a metal, and a cation represented by the general formula (2).

The optical recording medium of the invention is also an optical recording medium which can record information by light irradiation, which comprises a recording layer containing a dye compound obtained by salt formation between an anion wherein one or two compounds represented by the general formula (1) are coordinated with a metal, and a cation represented by the general formula (2).

In the chelate compound according to the present invention, the connecting group when the compound represented by the above general formula (1) (hereafter, "compound (1)") is coordinated with a metal, is the functional group X¹ or X² having an active oxygen atom in the compound (1).

The cyanine dye in the present invention is preferably the compound represented by the following formula (3) or (4), and it is particularly preferred that this be contained in the optical recording material:

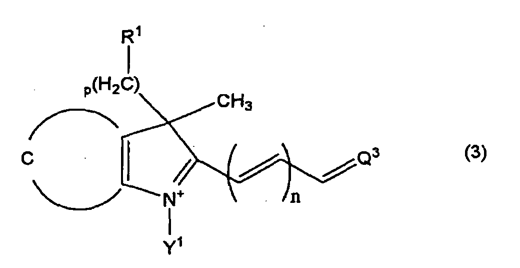

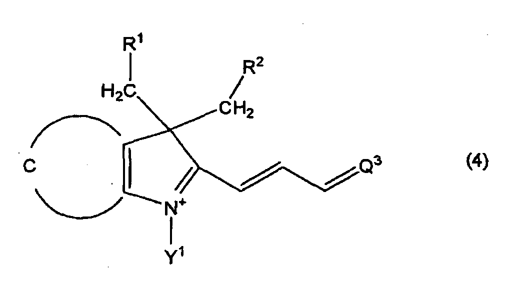

Herein, in formula (3) or (4), C is a group of atoms forming a benzene ring or naphthalene ring which may have a substituent group, R¹ and R² are respectively five or six-membered rings which may have a substituent group, Y¹ is a substituent group, and Q³ is a nitrogen-containing heterocyclic ring which may have a condensed ring. p and q are respectively integers from 1 to 4, and n is an integer from 0 to 3. n is preferably an interger from 0 to 1 in order to obtain more excellent recording and reproduction properties. Due to the use of this cyanine dye, an optical recording medium which can handle even higher speed recording can be provided.

The above Q³ may be an indolenine ring, benzoindolenine ring, oxazoline ring, thiazoline ring, selenazoline ring or imidazoline ring, but among these, an indolenine ring or benzoindolenine ring is preferred. Also, these nitrogen-containing heterocyclic rings may contain a substituent group. The substituent group may be a halogen atom, or an alkyl, alkoxy, aryl, acyl or nitro group.

Y¹ is an aliphatic hydrocarbon group, and preferably an alkyl group.
The alkyl group may have a substituent group, and preferably has 1 to 5 carbon atoms. The substituent group may be a halogen atom, or an alkyl or ether group.

A trimethinecyanine dye which may conveniently be used in this invention is represented by the following general formula (5):

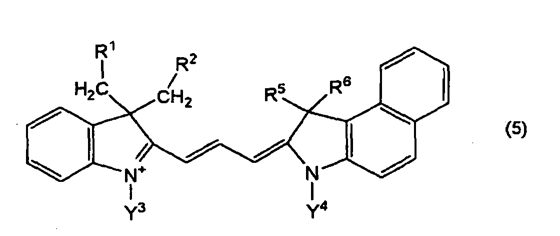

Herein, in formula (5), R¹ and R² are respectively five or six-membered rings which may have a substituent group, R⁵ and R⁶ are respectively alkyl or aryl group, and Y³ and Y⁴ are respectively alkyl groups having 1 to 4 carbon atoms.

X¹ and X² in the salt-forming chelate compound (1) are respectively one group selected from a group consisting of hydroxyl, amino, amide and sulfonamide groups, and preferably have one active hydrogen atom from the viewpoint of further enhancing the aforesaid effect.

From the same viewpoint, compound (1) is more preferably one compound selected from a group consisting of the compounds represented by following general formulae (6), (7), (8), (9), (10) and (11):

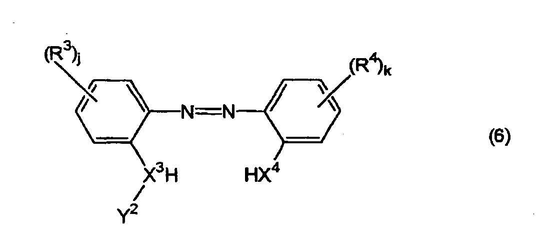

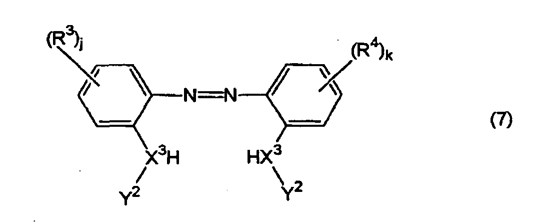

Herein, in formulae (6) and (7), X³ is a residue obtained by eliminating two active hydrogen atoms from a functional group having two or more active hydrogen atoms, X⁴ is a residue obtained by eliminating one active hydrogen atom from a functional group having one or more active hydrogen atoms, Y² is a substituent group, R³ and R⁴ may be identical or different and are monovalent groups selected from a group consisting of a halogen atom, an alkyl, aryl, acyl, alkoxy, alkenyl, hydroxyl, carboxyl, carbonate ester, sulfonyl, sulfonate ester, sulfamoyl, sulfonamide, carbamoyl, amide, amino and nitro groups, and j and k may be identical or different and are respectively integers from 0 to 4, and when two or more R³ or R⁴ are bonded to the carbon atom adjacent to the benzene ring, R³ and R⁴ may be joined to each other to form a ring, and the two X³ and two Y² in equation (7) may be identical or different. 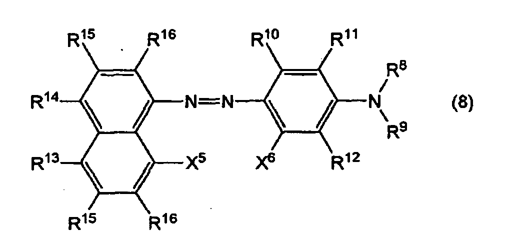 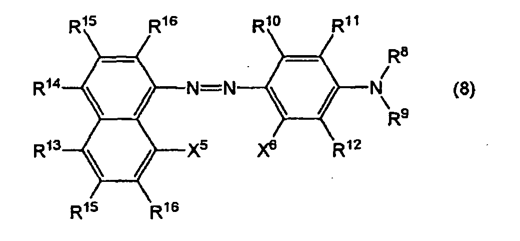 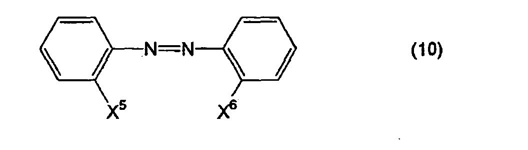 Herein, in formulae (8), (9) and (10), X⁵ and X⁶ are respectively functional groups having one or more active hydrogen atoms which may have a substituent group, R⁸ and R⁹ may respectively each be a hydrogen atom, an alkyl or aryl group, R⁸ and R⁹ may be joined together to form a ring, R¹⁰, R¹¹ and R¹² may respectively each be a monovalent group selected from a group consisting of a hydrogen atom, an alkyl group, a halogen atom, a hydroxyl, carboxyl, carbonate ester, sulfonyl, sulfonate ester, sulfamoyl, sulfonamide, carbamoyl, amide, amino, aryl, acyl, alkoxy and alkenyl groups, and R¹⁰ and R¹¹ may be joined together to form a ring. R⁸ and R¹¹ and R⁹ and R¹² may respectively be joined together to form rings, but in combination of R⁸ and R⁹, one of R⁸ and R⁹ is a hydrogen atom or an alkyl group and the other is an aryl group, or R⁸ and R⁹ form a ring, or one or both of R⁸ and R¹¹ and R⁹ and R¹² form a ring. R¹³, R¹⁴, R¹⁵ and R¹⁶ may respectively each be a monovalent group selected from a group consisting of a hydrogen atom, a halogen atom, a hydroxyl, carboxyl, sulfonyl, aryl, acyl, sulfonamide, amide, cyano, nitro, mercapto, thiocyano, amino, alkylthio, alkylazomethine, carbonate ester, carbamoyl, sulfonate ester, sulfamoyl, alkyl, alkoxy, aralkyl, and alkenyl groups, and R¹³ and R¹⁴, R¹⁴ and R¹⁵ or R¹⁵ and R¹⁶ may be joined together to form rings. 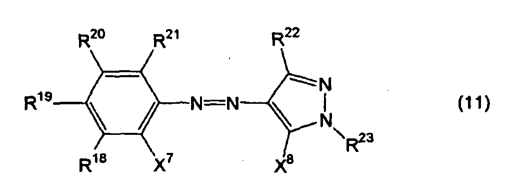 Herein, in formula (11), X⁷ and X⁸ are functional groups having one or more active hydrogen atoms which may have a substituent group, R¹⁸, R¹⁹, R²⁰, R²¹, R²² and R²³ may each be a hydrogen atom, halogen atom, nitro, cyano, hydroxyl, carboxyl, amino, substituted or unsubstituted alkyl, substituted or unsubstituted aryl, substituted or unsubstituted heterocyclic residue, substituted or unsubstituted alkyl carbonyl, substituted or unsubstituted arylcarbonyl, substituted or unsubstituted alkyloxycarbonyl, substituted or unsubstituted aryl oxycarbonyl, substituted or unsubstituted alkylsulfonyl, substituted or unsubstituted arylsulfamoyl, substituted or unsubstituted alkylthiooxy, substituted or unsubstituted arylthiooxy, substituted or unsubstituted alkyloxy, substituted or unsubstituted aryloxy, substituted or unsubstituted alkylamino, substituted or unsubstituted arylamino, substituted or unsubstituted alkylcarbonylamino, substituted or unsubstituted alkylcarbamoyl, substituted or unsubstituted aryl carbamoyl, or substituted or unsubstituted alkenyl group, and R¹⁸ and R¹⁹, R¹⁹ and R²⁰ or R²⁰ and R²¹ may be joined together to form a ring.

From the aforesaid considerations, the metal forming the aforesaid chelate compound is preferably a metal selected from a group consisting of vanadium, cobalt, nickel and copper.

In the recording layer of the optical recording medium of the present invention, it is preferred that the cation represented by the above general formula (2) (hereafter, ion (2)) is present more than the aforesaid chelate compound in terms of moles from the viewpoint of enhancing the balance of properties of the medium.

The optical recording material of the present invention and the recording layer with which the optical recording medium of this invention is provided, preferably further contain a cyanine dye compound. The chelate compound according to the present invention has a superior quenching effect, and when used in conjunction with a cyanine dye compound, reproduction deterioration due to oxidative degeneration of the dye can be effectively suppressed.

### BRIEF DESCRIPTION OF THE DRAWINGS

FIG. 1 is a partial cross-sectional view showing a suitable example of an optical disc relating to the optical recording medium of the present invention.
FIG. 2 is a partial cross-sectional view showing the other suitable example of an optical disc relating to the optical recording medium of the present invention.

### DETAILED DESCRIPTION OF THE INVENTION

Hereafter, some suitable examples of the present invention will be described in detail referring to the drawings as required. In the drawings, identical elements are assigned identical symbols and their description will not be repeated. Unless otherwise indicated, top/bottom/left/right positional relationships are based on the positional relationships shown in the drawings. It should be noted that the dimensional ratios in the drawings are not limited to the ratios shown.

### (Optical recording material)

The optical recording material of the present invention is an optical recording material used in an optical recording medium which can record information by light irradiation, and contains a dye compound (hereafter, "salt-forming dye") obtained by salt formation between a chelate compound (anion) wherein one or two of the aforesaid compounds (1) are coordinated with a metal, and the aforesaid ion (2).

In compound (1) which is an azo compound, A, B are groups of atoms which may be identical or different and which respectively form an aromatic ring. Specifically, the groups of atoms A, B respectively form an aromatic ring with two carbon atoms involved in a double bond. Specifically, this aromatic ring may be a benzene ring, naphthalene ring, pyridine ring, thiazole ring, benzothiazole ring, oxazole ring, benzooxazole ring, quinoline ring, imidazole ring, pyrazine ring, pyrrole ring, indolenine ring or benzoindolenine ring, but preferably a benzene ring or naphthalene ring.

The above aromatic ring may also contain a substituent group such as -X¹, -X² in addition to the group having an active hydrogen atom. Examples of this substituent group are alkyl, aryl, aralkyl, acyl, alkoxy, alkenyl, a halogen atom, hydroxyl, carboxyl, carbonate ester, sulfonyl, sulfonate ester, sulfamoyl, sulfonamide, carbamoyl, amino, amide, alkylthio, alkylazathio and nitro groups. If two or more R¹ or R² are bonded to the carbon atom adjacent to the aromatic ring, the substituent groups may be joined together to form a ring.

Among the substituent groups in the aromatic ring, the alkyl group preferably has a total of 1 to 12 carbon atoms. The alkyl group may be straight-chain or branched, and two or more thereof may be combined together. A substituent group such as a halogen atom or alkoxy group may also be bonded to the alkyl group.

The aryl group may for example be a phenyl or tolyl group. The total number of carbon atoms in the aryl group is preferably 6 to 10. The aryl group may be substituted or unsubstituted.

The acyl group may for example be an acetyl, propionyl or butylyl group. The total number of carbon atoms in the acyl group is preferably 2 to 5.

The aralkyl group may for example be a benzyl, hydroxybenzyl or methylbenzyl group. The total number of carbon atoms in the aralkyl group is preferably 7 to 10.

The alkoxy group preferably has a total of 1 to 4 carbon atoms, such as for example a methoxy, ethoxy, propoxy or pentafluoropropoxy group.

The alkenyl group may be straight-chain or branched, and may for example be a vinyl, allyl, propenyl, butenyl or pentenyl group. The total number of carbon atoms is preferably 2 to 10.

The halogen atom may for example be a fluorine, chlorine or bromine atom.

The carboxylate ester preferably has a total of 2 to 10 carbon atoms, such as for example a methoxycarbonyl, ethoxycarbonyl, propoxycarbonyl or acetoxycarbonyl group.

The sulfonyl group preferably has a total of 1 to 10 carbon atoms, such as for example a methylsulfonyl, benzenesulfonyl, ethylsulfonyl or n-propylsulfonyl group.

The sulfonate ester preferably has a total of 1 to 10 carbon atoms, such as for example a methoxysulfonyl, ethoxysulfonyl, propoxysulfonyl or butoxysulfonyl group.

The sulfamoyl group may have a substituent group, and preferably has a total of 0 to 10 carbon atoms, such as for example a sulfamoyl, methylsulfamoyl, ethylsulfamoyl, n-propylsulfamoyl or iso-propyl sulfamoyl group.

The sulfonamide group preferably has a total of 1 to 10 carbon atoms, such as for example a methylsulfonamide, ethylsulfonamide or n-propylsulfonamide group.

The carbamoyl group may have a substituent group, and preferably has a total of 1 to 10 carbon atoms, such as for example a carbamoyl, methylcarbamoyl, ethylcarbamoyl, n-propylcarbamoyl or iso-propyl carbamoyl group.

The amino group preferably has a substituent group, this substituent group most preferably being a dialkylamino group. In this case, the number of carbon atoms of the alkyl part of this dialkylamino group is preferably 1 to 12, and it may be straight-chain or branched.

The amide group preferably has a total of 2 to 10 carbon atoms, such as for example an acetoamide, propionylamide, butylylamide or benzoamide group.

The alkylthio group preferably has a total of 1 to 4 carbon atoms, such as for example a methylthio, ethylthio, n-propylthio or iso-propylthio group.

The alkylazomethine group preferably has a total of 2 to 5 carbon atoms, such as for example a methylazomethine, ethylazomethine or n-propylazomethine group.

X¹ and X² are not particularly limited provided that they are respectively functional groups having one or more active hydrogens, and they may have a substituent group. Examples of the functional group having one or more active hydrogens are hydroxyl (-OH), thio (-SH), amino (-NH₂), carboxyl (-COOH), amide (-CONH₂), sulfonamide (SO₂NH₂) and sulfo (-SO₃H) groups. Examples of the aforesaid substituent group are alkyl, aryl, acyl, alkoxy, halogen, hydroxyl, carboxyl, carbonate ester, sulfonyl, sulfamoyl, sulfonamide, carbamoyl, amide, amino, alkenyl, cyano, nitro, mercapto, thiocyano, alkylthio, alkylazomethine and aralkyl groups. Among these, an alkyl, sulfonyl (-SO₂-R: R is a substituted or unsubstituted alkyl group, or a substituted or unsubstituted aryl group), or acyl group(-CO-R: R is a substituted or unsubstituted alkyl group, or a substituted or unsubstituted aryl group), is preferred. If R in the sulfonyl group or acyl group is an alkyl group, the number of carbon atoms in this alkyl group is preferably 1 to 6.

Among the azo compounds (1) having the aforesaid structure, the compound is more preferably one compound selected from a group consisting of compounds represented by the general formulae (6), (7), (8), (9), (10) and (11).

X³ is a residue obtained by eliminating two active hydrogen atoms from a functional group having two or more active hydrogen atoms. The functional group having two or more active hydrogen atoms is preferably amino (-NH₂), amide (-CONH₂) or sulfonamide (-SO₂NH₂), but amino is particularly preferred. Therefore, X¹ is preferably -NH-, -CONH- or -SO₂NH-, and -NH- is particularly preferred. The two X¹ and the two Y¹ in formula (7) may be identical or different.

X² is a residue obtained by eliminating one active hydrogen atom from a functional group having one or more active hydrogen atoms. The functional group having one or more active hydrogen atoms is preferably a hydroxyl (-OH), thio (-SH), amino (-NH₂), carboxyl (-COOH), amide (-CONH₂), sulfonamide (-SO₂NH₂) or sulfo (-SO₃H) group, but the hydroxyl group is particularly preferred. Therefore, X² is preferably -O-, -S-, -NH-, -COO-, -CONH-, -SO₂NH- or -SO₃ and -O- is particularly preferred.

Y² is a substituent group bonded to X³ which is identical to the above. Therefore, Y² is preferably alkyl, sulfonyl (-SO₂-R: R is a substituted or unsubstituted alkyl group, or a substituted or unsubstituted aryl group), or acyl (-CO-R: R is a substituted or unsubstituted alkyl group. If R in the sulfonyl group or acyl group is an alkyl group, the number of carbon atoms in this alkyl group is preferably 1 to 6.

Preferred examples of the azo compound (1) according to the present invention are the compounds represented by the following formulae (12)-(57):

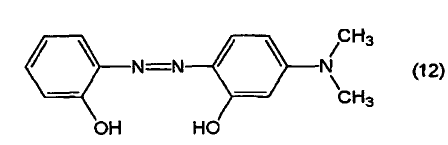

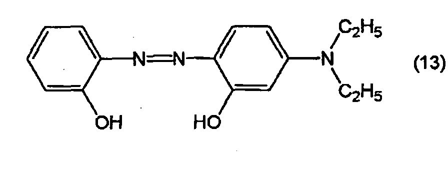

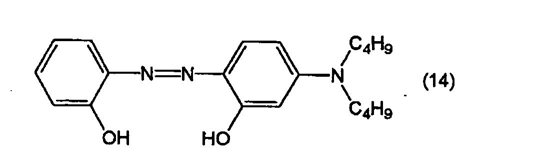

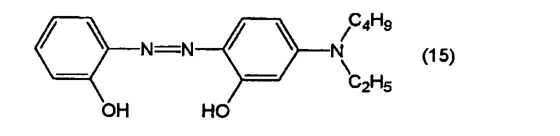

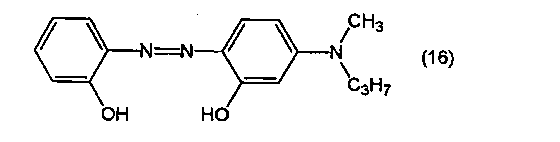

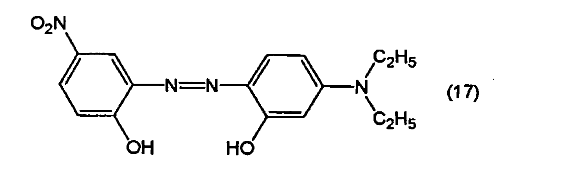

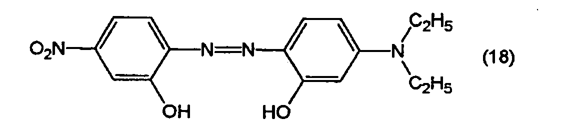

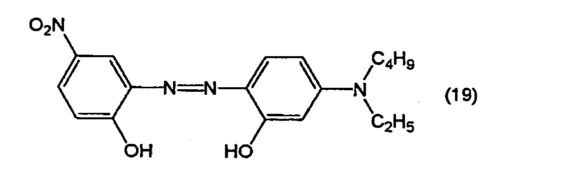

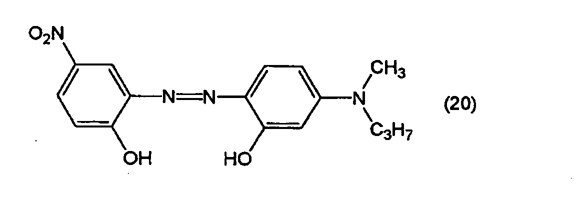

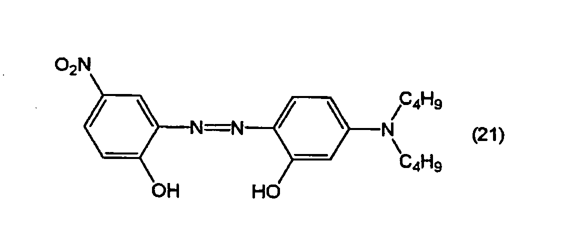

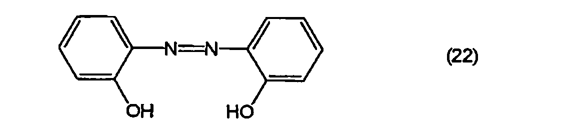

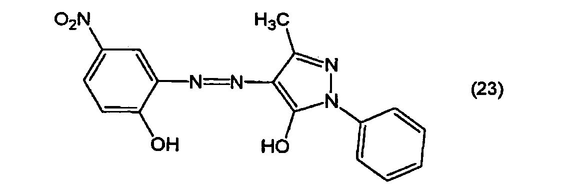

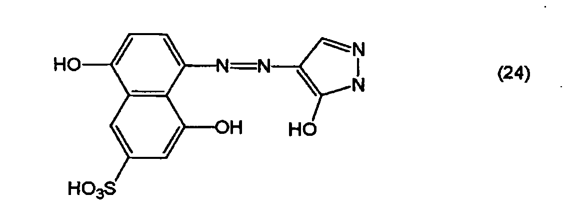

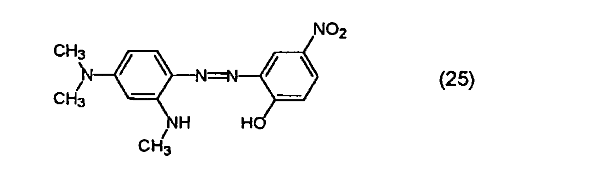

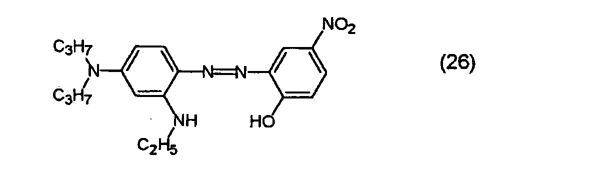

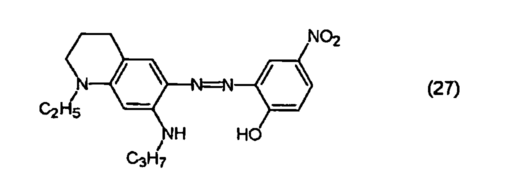

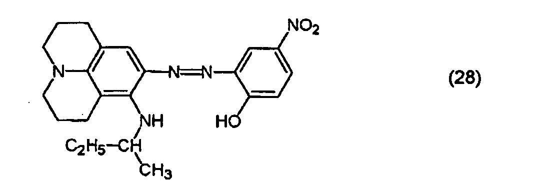

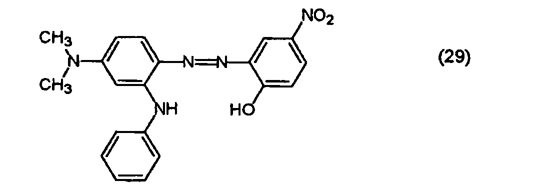

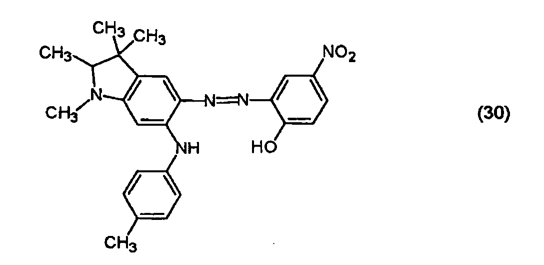

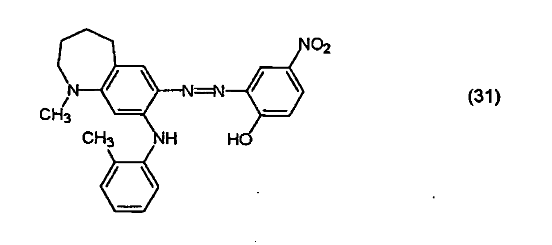

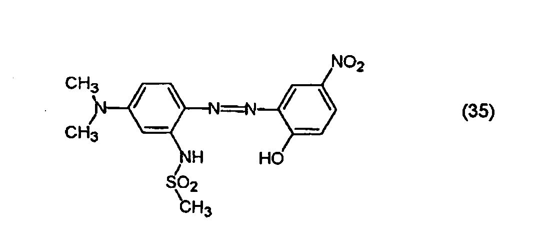

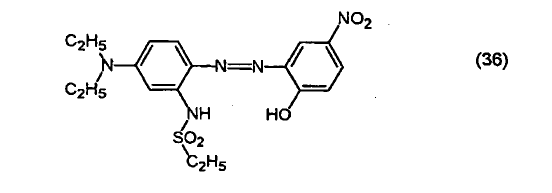

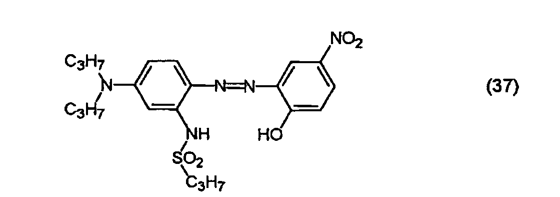

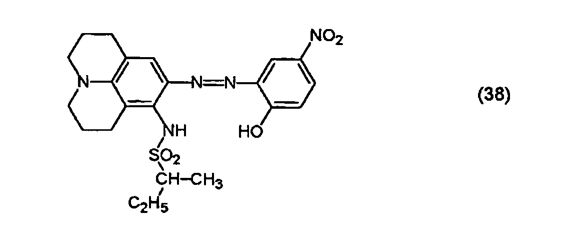

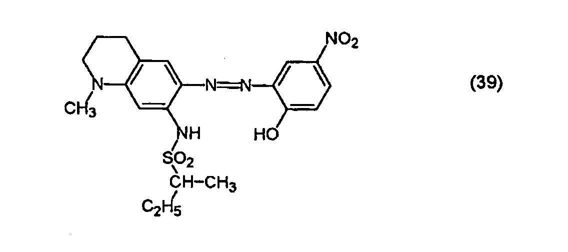

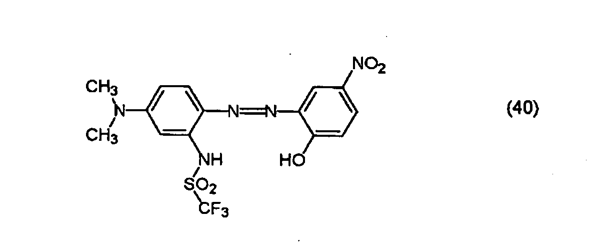

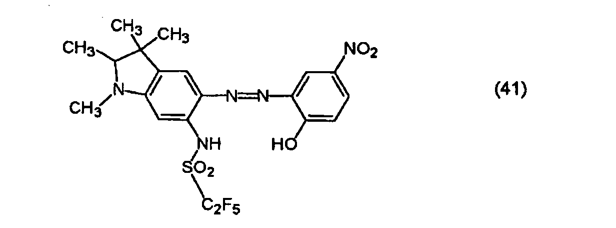

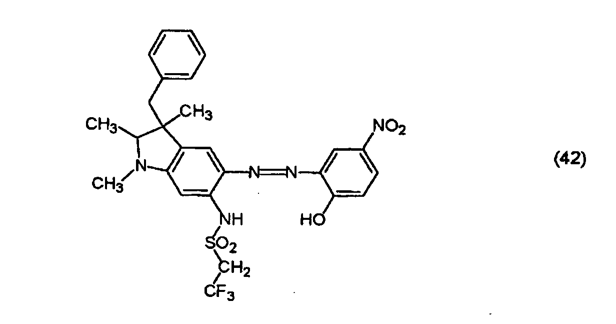

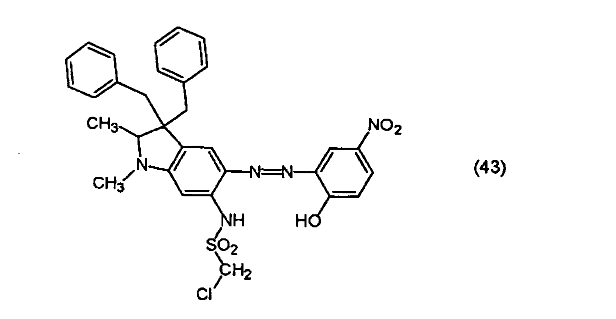

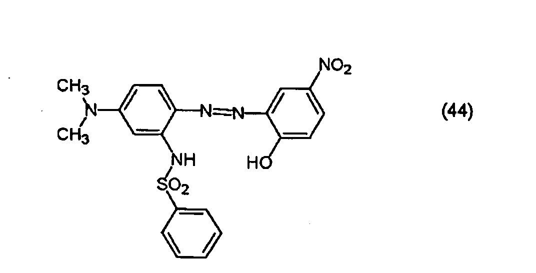

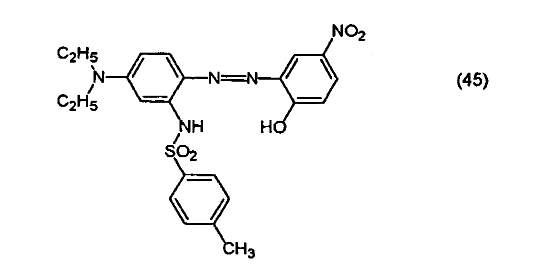

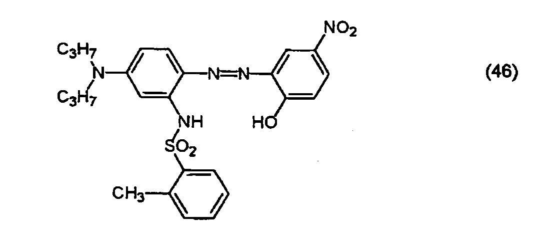

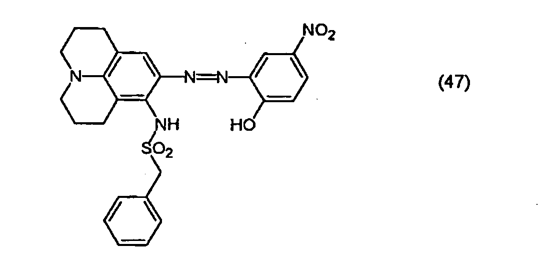

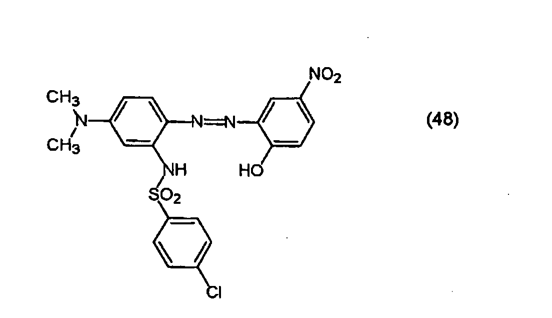

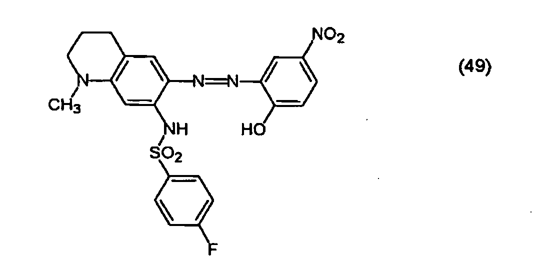

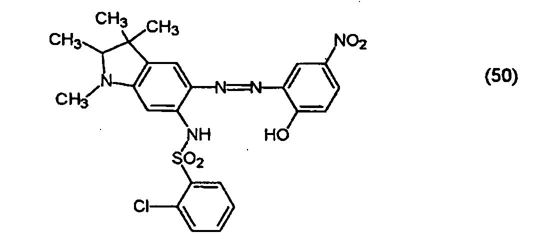

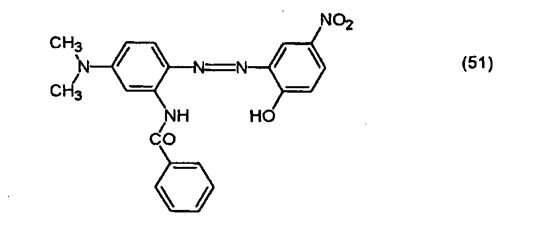

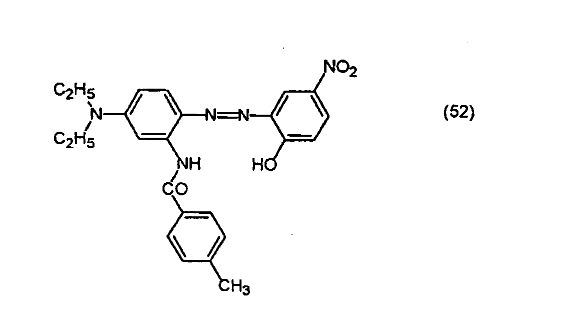

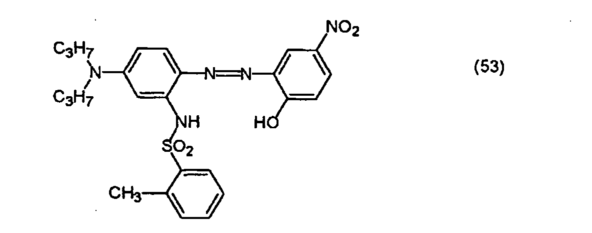

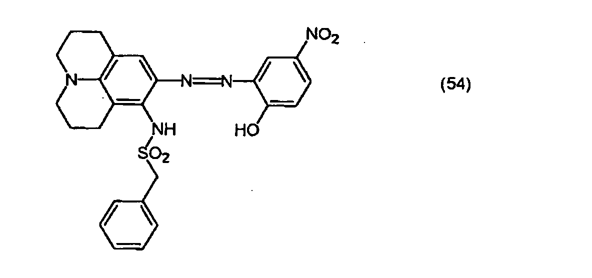

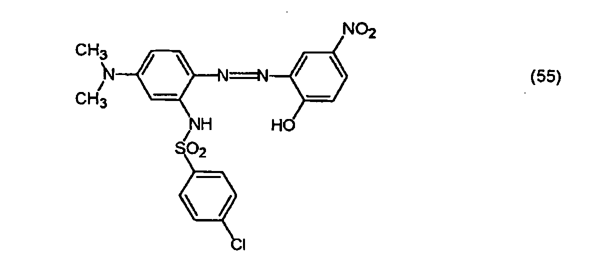

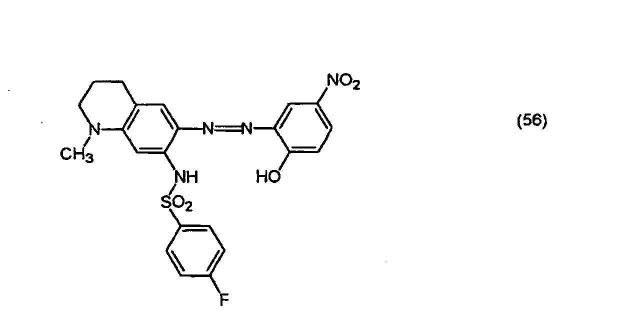

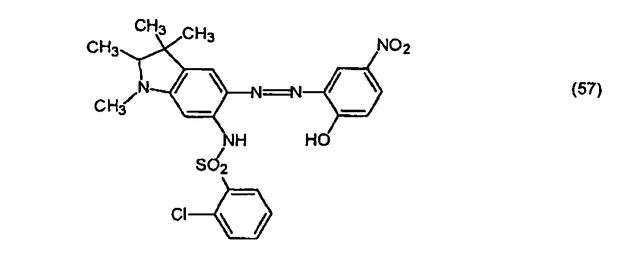

In addition, the chelate compounds mentioned in Japanese Patent No. 3441410, Japanese Patent No. 3364231 and JP No. 2000-190641 may be mentioned.

Examples of the metal (core metal) of the chelate compound are titanium, vanadium, chromium, manganese, iron, cobalt, nickel, copper, zirconium, niobium, molybdenum, ruthenium, rhodium, palladium, silver, cadmium, indium, tin, antimony, tungsten, rhenium, osmium, iridium, platinum and gold. Among these, cobalt and nickel are preferred.

In the chelate compound according to the present invention, a co-ordinate bond may be formed between the triligand obtained by removing two active hydrogen atoms from the azo compound (1) represented by the general formula (6) or (7) and a metal. When for example the metal is cobalt (Co), two triligands are coordinated with one cobalt atom to form the chelate compound.

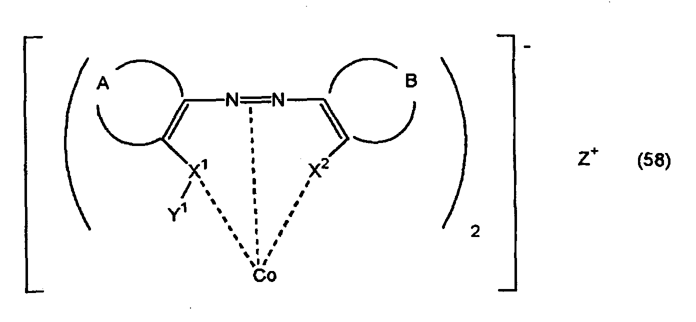

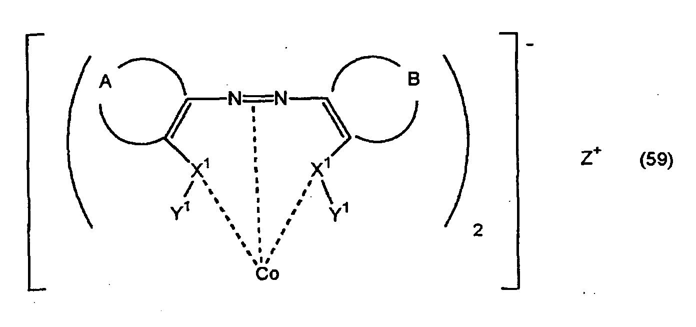

Z⁺ in the aforesaid general formulae (58), (59) represents a counter cation. Examples of the counter cation are alkali metal ions such as Na⁺, Li⁺, K⁺ and ammonium ion. Cyanine dye having a positive charge may also be used as a counter cation to form a salt.

Further, examples of a cyanine dye counter anion are halogen compound ions (Cl⁻, Br⁻, I⁻) ClO₄⁻, BF₄⁻, PF₆⁻, SbF₆⁻, VO₃⁻, VO₄³⁻, WO₄²⁻, CH₃SO₃⁻, CF₃COO-, CH₃COO-, HSO₄⁻, CF₃SO₃, paratoluene sulfonic acid ion (PTS-) and p-trifluoromethylphenylsulfonic acid ion (PFS⁻). Among these, ClO₄⁻, BF₄⁻, PF₆⁻ and SbF₆⁻ are preferred.

The method of synthesising the chelate compound according to the present invention is not particularly limited, and the compound may be synthesized by the usual methods (e.g., Furukawa, Anal. Chem. Acta., 140, 289 (1982)).

An example of a cyanine dye which may be used in this invention is the trimethinecyanine dye represented by the following general formula (60):

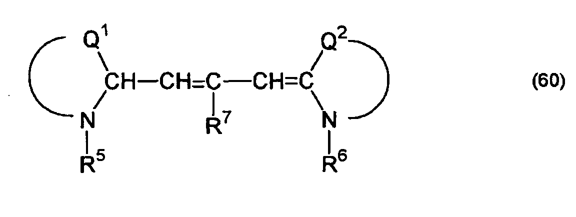

In formula (60), Q¹ and Q² are groups of atoms which may be identical or different, and which are required to respectively form a five-membered nitrogen-containing heterocyclic ring which may have a condensed ring. Examples of this heterocyclic ring are an indolenine ring, benzoindolenine ring, oxazoline ring, thiazoline ring, selenazoline ring and imidazoline ring, among which an indolenine ring and benzoindolenine ring are preferred. These nitrogen-containing heterocyclic rings may have a substituent group. Examples of the substituent group are a halogen atom, an alkyl, alkoxy, aryl, acyl, amino and nitro groups.

R⁵, R⁶ respectively represent an aliphatic hydrocarbon group which is preferably alkyl. The alkyl group may have a substituent group, and preferably has 1 to 5 carbon atoms. Examples of the substituent group are a halogen atom, an alkyl and ether groups.

R⁷ is a hydrogen atom, or a monovalent substituent group such as a halogen atom or an alkyl group.

Among the trimethinecyanine dye compounds represented by the general formula (60), the compounds represented by the following formulae (61)-(72) are more preferred, and among these, the compound represented by the formula (72) which is a cyanine dye compound represented by the aforesaid general formula (2), is particularly preferred from the viewpoint that it permits an optical recording material having even better, well-balanced recording/reproduction properties, light resistance and recording layer film-forming properties to be obtained.

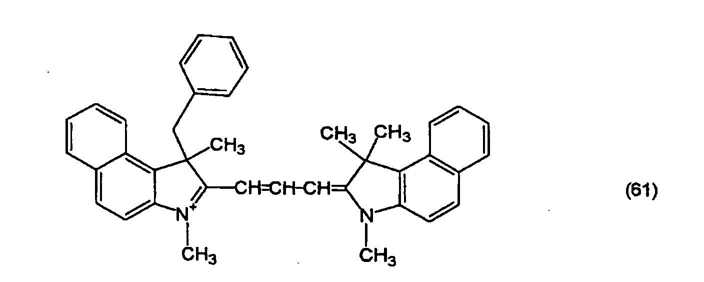

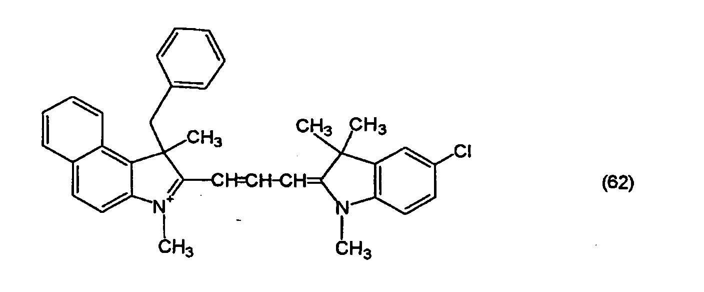

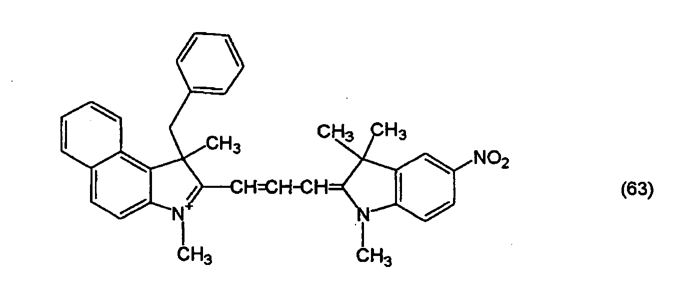

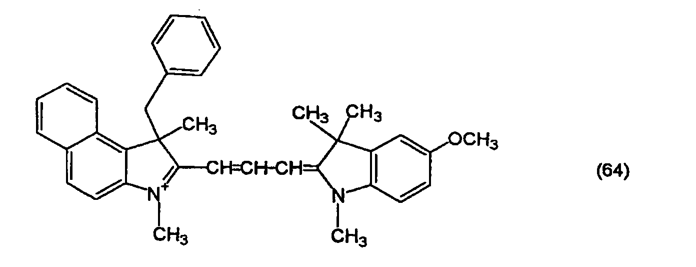

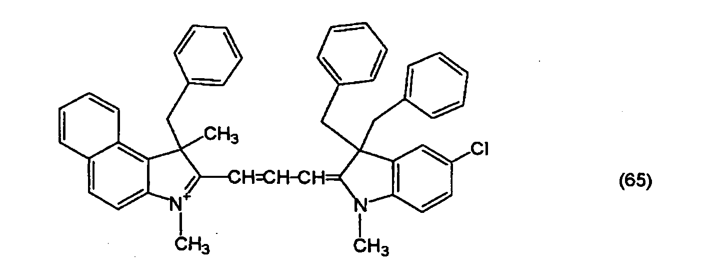

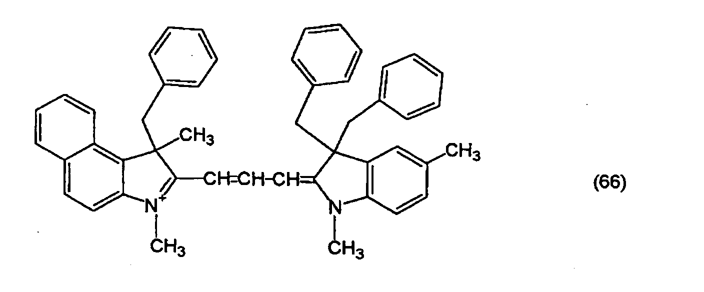

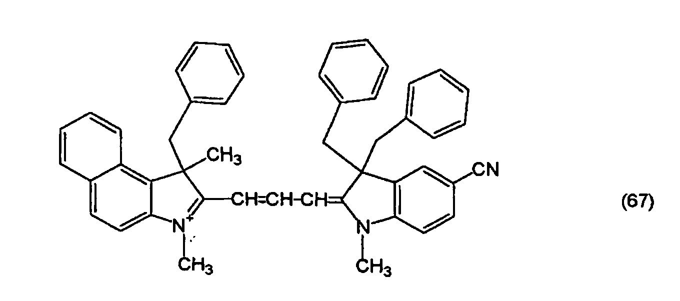

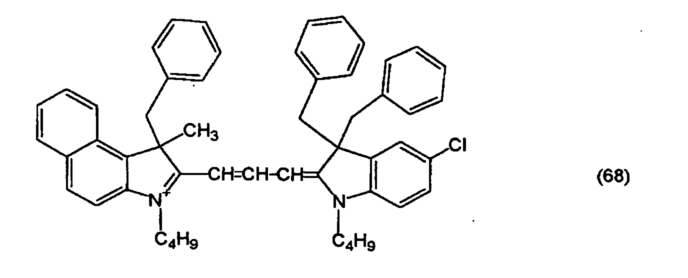

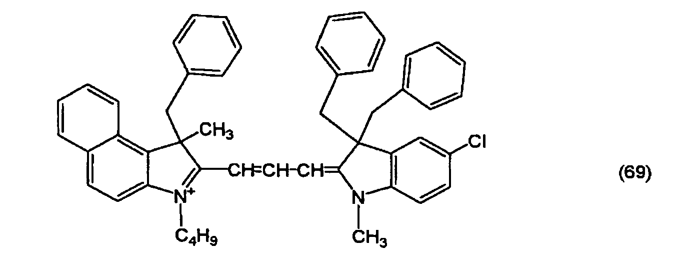

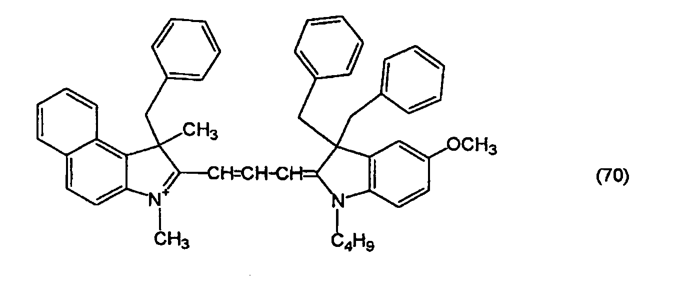

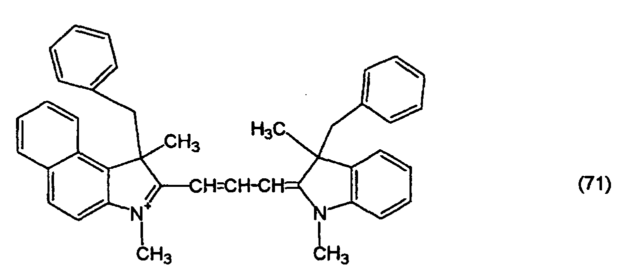

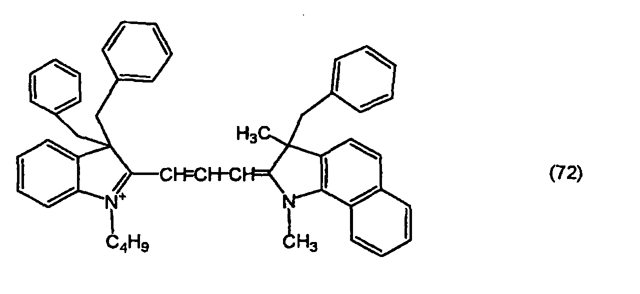

When the cyanine dye and chelate compound according to the present invention are contained in the recording layer of the optical recording medium, the salt-forming dye may be present alone, or used in conjunction with other dye compounds. When the cyanine dye and chelate compound of the present invention are used in conjunction with other dye compounds, physical properties such as light resistance and disk electrical properties may be further enhanced due to the superior functions of the cyanine dye and chelate compound of the invention. Examples of other dyes used in conjunction are the aforesaid cyanine dyes, among which the compound represented by the aforesaid formula (61) is preferred.

This cyanine dye used in conjunction is preferably the trimethinecyanine dye represented by the following general formula (60): 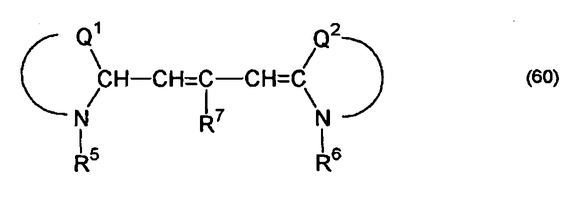 In formula (60), Q¹ and Q² are groups of atoms which may be identical or different, and which are required to respectively form a five-membered nitrogen-containing heterocyclic ring which may have a condensed ring. Examples of this heterocyclic ring are an indolenine ring, benzoindolenine ring, oxazoline ring, thiazoline ring, selenazoline ring and imidazoline ring, among which an indolenine ring and benzoindolenine ring are preferred. These nitrogen-containing heterocyclic rings may have a substituent group. Examples of the substituent group are a halogen atom, an alkyl, alkoxy, aryl, acyl, amino and nitro groups.

R⁵ and R⁶ respectively represent an aliphatic hydrocarbon group which is preferably alkyl. The alkyl group may have a substituent group, and preferably has 1 to 5 carbon atoms. Examples of the substituent group are a halogen atom, an alkyl and ether groups.

R⁷ is a hydrogen atom, or a monovalent substituent group such as a halogen atom or an alkyl group.

Among these, the compounds represented by formulae (61), (62), (63), (64) or (71) are particularly preferred.

The blending ratio of the chelate compound of the present invention and other dyes is not particularly limited, but including the case of salt-forming dyes, it is preferably chelate compound: other dye = 100:0 to 10:90 in terms of mass ratio, and more preferably 30:70 to 70:30 in terms of mass ratio.

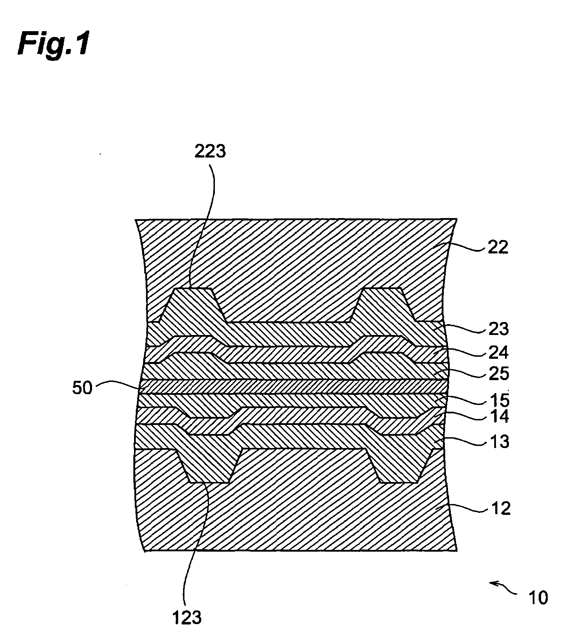

FIG. 1 is a partial sectional view showing one example of an optical recording disk relating to the optical recording medium of the present invention. An optical recording disk 1 shown in FIG. 1 is a tracking type optical recording compact disk having the DVD specification, and permits recording/reproduction using light of a short wavelength, i.e., 635-680nm.

As shown in FIG. 1, an optical recording disk 10 is manufactured by sticking two optical recording discs together with their protective layers facing each other using an adhesive. Specifically, the optical recording disk 10 has a structure wherein, viewed from one side, a substrate 12, recording layer 13, reflecting layer 14, protective layer 15, adhesive layer 50, protective layer 25, reflecting layer 24, recording layer 23 and substrate 22 are laminated in this order.

The substrate 12 is a disk having a diameter of the order of 64-200nm and a thickness of the order of 0.6mm. To permit recording and reproduction from the undersurface of the substrate 12 (opposite side to the recording layer 13), the substrate 12 is preferably substantially transparent to recording light and reproduction light, and more specifically, the substrate 12 preferably has a transmittivity of 88% or more with respect to recording light and reproduction light. The material of the substrate 12 is preferably a resin or glass satisfying the aforesaid transmittivity condition, among which thermoplastic resins such as polycarbonate resin, acrylic resin, amorphous polyethylene, TPX and polystyrene resin are particularly preferred.

Grooves 123 and 223 are respectively formed on the surface forming the recording layer 13 of the substrate 12 and the surface forming the recording layer 23 of the substrate 22. The grooves 123 and 223 are preferably spiral continuous grooves, and preferably, they have a thickness of 60-200nm, width of 0.2-0.5µm and groove pitch of 0.6-1.0µm. Due to forming the grooves with this construction, a good tracking signal can be obtained without decreasing the reflectivity level of the grooves. The groove 123 can be formed simultaneously when the substrate 12 is formed by extrusion molding or the like using the aforesaid resin, but alternatively, a resin layer having the groove 123 may be formed by the 2P method after manufacturing the substrate 12, and a composite substrate then formed between the substrate 12 and resin layer. The respective thicknesses of the recording layers 13 and 23 are 50-200nm, and the complex refractive indices with respect to recording light are preferably n=1.8-2.6, k=0.02-0.20.

The recording layer 13 is a layer containing the chelate compound of the present invention, and preferably further contains another dye.

The recording layer 13 can be formed by coating a coating solution containing the chelate compound of the present invention on the substrate 12, and drying the coating film if required. The coating film solvent may specifically be an alcoholic solvent (including an alkoxy alcohol such as a keto alcohol or ethylene glycol monoalkyl ether), aliphatic hydrocarbon solvent, ketone solvent, ester solvent, ether solvent, aromatic solvent or halogenated alkyl solvent, among which an alcohol solvent and aliphatic hydrocarbon solvent are preferred.

The alcoholic solvent is preferably an alkoxy alcohol or a keto alcohol. The alkoxy alcohol solvent preferably includes an alkoxy part having 1 to 4 carbon atoms, and an alcohol part having 1 to 5 carbon atoms but preferably 2 to 5 carbon atoms, and the total number of carbon atoms is preferably 3 to 7. Specific examples are ethylene glycol monoalkyl ethers (cellosolves) such as ethylene glycol monomethylether (methyl cellosolve), ethylene glycol monoethylether (ethyl cellosolve, referred to also as ethoxyethanol), butyl cellosolve or 2-isopropoxy-1-ethanol, and 1-methoxy-2-propanol, 1-methoxy-2-butanol, 3-methoxy-1-butanol, 4-methoxy-1-butanol and 1-ethoxy-2-propanol. The keto alcohol may be a diacetoalcohol. A fluorinated alcohol such as 2,2,3,3-tetrafluoropropanol may also be used.

The aliphatic hydrocarbon solvent is preferably n-hexane, cyclohexane, methyl cyclohexane,ethyl cyclohexane, cyclo-octane, dimethyl cyclohexane, n-octane, isopropyl cyclohexane or t-butyl cyclohexane, among which ethyl cyclohexane and dimethyl cyclohexane are preferred.

The ketone may be cyclohexanone or the like.

According to the present invention, an alkoxy alcohol such as ethylene glycol monoalkyl ether is preferred, and among these, ethylene glycol mono ethyl ether, 1-methoxy-2-propanol or 1-methoxy-2-butanol is preferred. The solvent may be one thereof used alone, or a mixed solvent containing two or more thereof. An example is a mixed solvent of ethylene glycol monoalkyl ether and 1-methoxy-2-butanol.

The coating solution, in addition to the chelate compound and other dye of this invention, may further contain a binder, dispersant, stabilizer or the like. The amount of chelate compound in this coating solution is preferably 0.5-10 mass %.

The coating solution may be applied by spin coating, gravure coating, spray coating or dip coating, but spin coating is preferred.

The thickness of the recording layer 13 thus formed is preferably 30-300nm in terms of dry film thickness. Outside this range, reflectivity decreases and it is difficult to perform reproduction according to the DVD specification.

The extinction coefficient (imaginary part k of the complex refractive index) of the recording layer 13 with respect to the recording light and reproduction light is preferably 0-0.20. If the extinction coefficient exceeds 0.20, sufficient reflectivity may not be obtained. The refractive index (real part n of the complex refractive index) of the recording layer 13 is preferably 1.8 or more. If the refractive index is less than 1.8, the degree of signal modulation may decrease. The upper limit of refractive index is not particularly limited, but it is normally of the order of 2.6 from the viewpoint of ease of synthesizing the organic dye.

The extinction coefficient and refractive index of the recording layer 13 may be found by the following procedure. First, a recording layer of the order of 40-100nm is provided on a predetermined transparent substrate to manufacture a measurement sample, and the reflectivity through the substrate of this measurement sample or the reflectivity from the recording layer side is measured. In this case, the reflectivity is measured at the mirror surface reflectivity (approximately 5°) using the wavelength of the recording/reproduction light. The transmittivity of the sample is also measured. From these measured values, the extinction coefficient and refractive index can be computed according to the method described for example in Kyoritsu Zensho "Optics", Kozo Ishiguro, pp. 168-178.

The reflecting layer 14 is provided on the recording layer 13 and in intimate contact with the recording layer 13. The reflecting layer 14 may be formed by vapor deposition or sputtering using a highly reflecting metal or alloy. Examples of this metal or alloy are gold (Au), copper (Cu), aluminum (Al), silver (Ag) or AgCu. The thickness of the reflecting layer 14 thus formed is 50-120nm.

The protective layer 15 is provided on the reflecting layer 14 and in intimate contact with the reflecting layer 14. The protective layer 15 may be film-like or sheet-like, and may for example be formed by coating a coating solution containing a material such as an ultraviolet curing resin on the reflecting layer 14, and drying the coating film if required. This coating may be performed by spin coating, gravure coating, spray coating or dip coating. The thickness of the protective layer 15 thus formed is preferably 0.5-100µm.

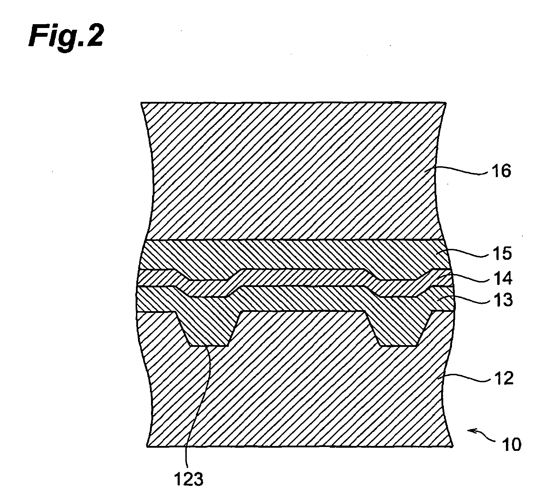

As shown in Fig. 2, a dummy substrate 16 may be provided on the protective layer 15 as to make the dummy substrate 16 and the protective layer 15 stick together. The dummy substrate 16 may have the same or like material and thickness as the substrate 12.

When recording or tracking is performed on the optical recording disk 10 having the aforesaid construction, and recording light having a predetermined wavelength is irradiated as a pulse from the undersurface of the substrate 12 which causes the optical reflectivity of the irradiated part to vary. At this time, if the optical recording disk 10 provided with the recording layer 13 containing the chelate compound of the present invention is used, even when information recording/reproduction is performed using recording/reproduction light of short wavelength, superior, well-balanced film-forming properties, light resistance and recording/reproduction properties of the recording layer can be achieved.

The aforesaid example was described in the case of an optical recording disk having one of the recording layers 13, but plural recording layers may be provided wherein each layer contains a different organic dye, each of which is reactive by irradiating light having a different wavelength. In this way, information recording/reproduction can be performed by plural recording/reproduction lights having different wavelengths. In this case, a reflecting layer which is translucent to the corresponding recording/reproduction light may be provided on each recording layer.

The material of the adhesive layer 50 is preferably a thermocuring resin, the thickness of the adhesive layer 50 being from about 10 to 200nm.

The above description of the invention refers to an example suitable for a DVD-R, but the present invention is not limited thereto. For example, regarding the optical recording disk, the construction of the optical recording disk 10 is not limited to the above, and the protective layer may for example also be given the function of an adhesive layer.

### <EXAMPLES>

Hereafter, this invention will be described in further detail referring to specific examples, but it will be understood that the invention is not to be construed as being limited in any way thereby.

### (Example 1)

A polycarbonate resin substrate was prepared of diameter 120mm and thickness 0.6mm having a pre-groove (depth 180nm, width 0.30µm, groove pitch 0.74µm) on one side. A recording layer coating solution was also prepared by adding a salt-forming dye 1 represented by the following formula (73) to 2,2,3,3-tetrafluoropropanol so that its content was 1.0 mass %.

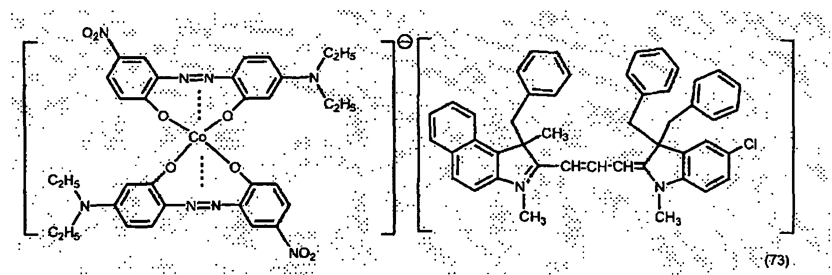

The obtained coating solution was coated on the surface of the aforesaid polycarbonate resin substrate having the pre-groove formed thereupon, and dried to form a recording layer (thickness 100nm). Next, an Ag reflecting layer (thickness 85nm) was formed by sputtering on this recording layer, and a transparent protective layer (thickness 5µm) comprising an ultraviolet curing acrylic resin was formed on the Ag reflecting layer so as to obtain a laminated structure. Two of these laminated structures were manufactured, and stuck together with their protective layers facing each other using adhesive so as to obtain an optical disc having the construction shown in FIG. 2.

### (Example 2)

An optical recording disk was manufactured in an identical manner to that of Example 1, except that the salt-forming dye 2 represented by the following formula (74) was used instead of the salt-forming dye 1 of Example 1.

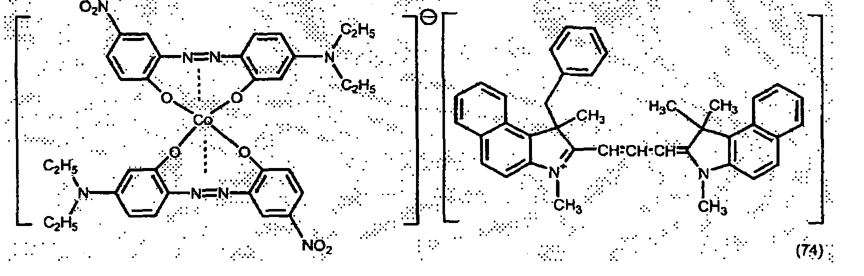

### (Examples 3-13, Comparative Example 1-3)

In Examples 3-13 and Comparative Example 1-3, an optical disc was manufactured in an identical manner to that of Example 1, except that the dye compositions 3-13 represented shown in Table 1 were respectively used instead of the salt-forming dye 1. In Table 1, the figures in brackets refer to symbols for chemical structural formulae given hereabove and hereafter.

**Table 1**

| | Salt | | Cyanine | |
|---|---|---|---|---|
| | Chemical formula No. | Composition (mass %) | Chemical formula No. | Composition (mass %) |
| Example 3 | 73 | 40 | 61 | 60 |
| Example 4 | 73 | 50 | 61 | 50 |
| Example 5 | 74 | 40 | 65 | 60 |
| Example 6 | 74 | 40 | 66 | 60 |
| Example 7 | 74 | 40 | 67 | 60 |
| Example 8 | 74 | 40 | 68 | 60 |
| Example 9 | 73 | 30 | 61 | 70 |
| Example 10 | 73 | 60 | 61 | 40 |
| Example 11 | 73 | 70 | 61 | 30 |
| Example 12 | 73 | 40 | 77 | 60 |
| Example 13 | 73 | 40 | 78 | 60 |
| Comp. Ex. 1 | 75 | 70 | 76 | 30 |
| Comp. Ex. 2 | 75 | 100 | - | - |
| Comp. Ex. 3 | 75 | 40 | 76 | 60 |

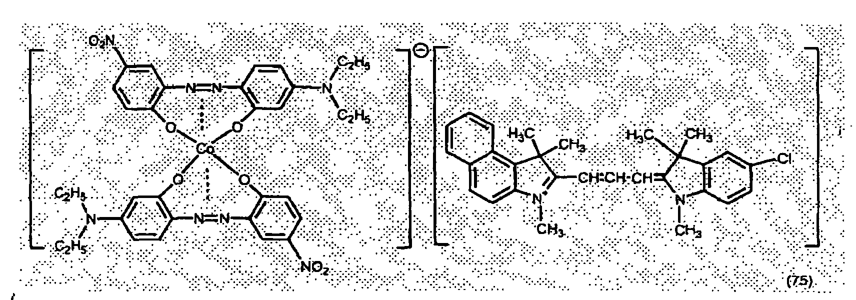

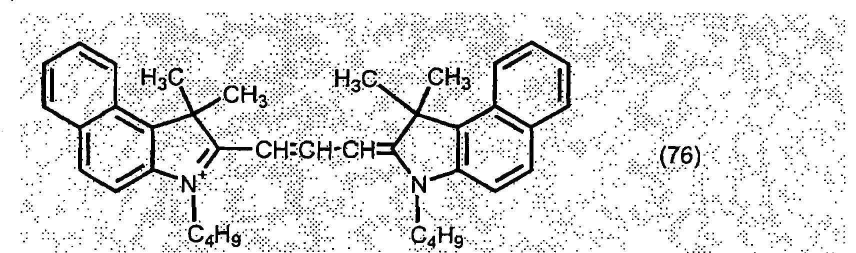

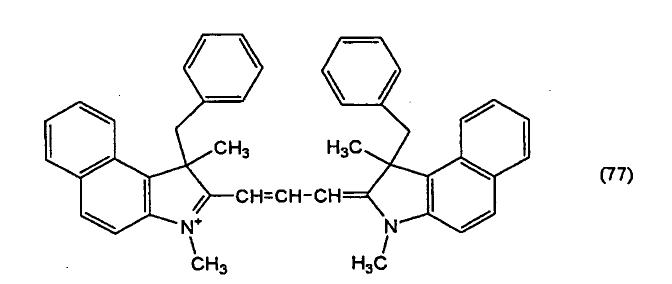

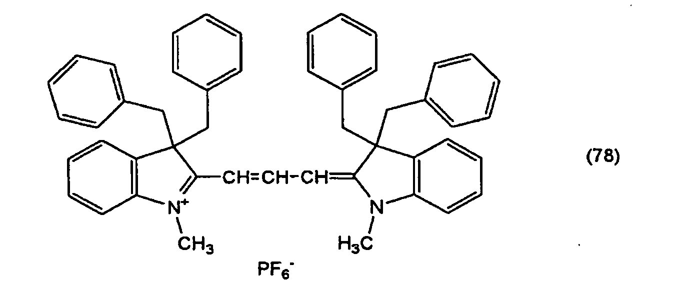

### [Evaluation of recording/reproduction properties]

Next, a signal was recorded on the optical recording discs of Examples 1-13 and Comparative Example 1-3 at a linear speed of 3.5m/sec or 28.0m/sec using a laser light of wavelength 655nm. Next, the signal was reproduced at a linear speed of 3.5m/sec using a laser light of wavelength 655nm. The lens aperture NA was 0.60. The properties at this time were evaluated based on the reflectivity (Rtop), modulation degree (Mod.), jitter and optimum recording power (P0). The results of recording at linear speeds of 3.5m/sec and 28.0m/sec are respectively shown in Table 2.

**Table 2**

| | 1X (linear speed 3.5m/sec) | | | | 8X (linear speed 28.0m/sec) | | | |
|---|---|---|---|---|---|---|---|---|
| | Power (mW) | Reflectivity (%) | Modulation degree (%) | Jitter (%) | Power (mW) | Reflectivity (%) | Modulation degree (%) | Jitter (%) |
| Example 1 | 8.0 | 54 | 60 | 8.0 | 30.0 | 50 | 70 | 8.0 |
| Example 2 | 5.8 | 45 | 65 | 8.0 | 26.0 | 45 | 73 | 8.3 |
| Example 3 | 6.2 | 48 | 63 | 7.5 | 27.0 | 48 | 70 | 7.0 |
| Example 4 | 6.3 | 50 | 63 | 7.0 | 27.2 | 50 | 68 | 6.8 |
| Example 5 | 6.0 | 47 | 65 | 6.5 | 26.8 | 47 | 69 | 6.7 |
| Example 6 | 6.3 | 48 | 60 | 7.0 | 26.9 | 48 | 70 | 7.0 |
| Example 7 | 6.4 | 48 | 65 | 7.3 | 27.0 | 48 | 73 | 7.1 |
| Example 8 | 6.2 | 49 | 63 | 7.0 | 27.0 | 49 | 75 | 6.9 |
| Example 9 | 6.0 | 45 | 60 | 7.2 | 24.0 | 45 | 68 | 8.0 |
| Example 10 | 6.5 | 45 | 63 | 7.0 | 25.5 | 43 | 67 | 7.1 |
| Example 11 | 7.1 | 53 | 64 | 7.2 | 26.8 | 53 | 69 | 6.9 |
| Example 12 | 6.8 | 47 | 61 | 7.2 | 26.5 | 47 | 65 | 6.8 |
| Example 13 | 5.9 | 51 | 62 | 7.3 | 28.0 | 49 | 66 | 7.2 |
| Comp. Ex. 1 | 7.0 | 48 | 70 | 7.8 | 28.0 | 46 | 85 | >14 |
| Comp. Ex. 2 | 7.3 | 49 | 54 | 8.1 | 31.0 | 48 | 84 | 14 |
| Comp. Ex. 3 | 7.8 | 46 | 58 | 8.7 | 30.5 | 46 | 82 | 9.4 |

As shown in Table 2, the optical recording disk of Examples 1-13 has satisfactory recording/reproduction properties at linear speeds of both 3.5m/sec and 28.0m/sec, and can easily handle high-speed recording.

On the other hand, the optical recording disk of the Comparative Example 1-3 show considerable increase of jitter and increase of optimum recording power at linear speeds of both 3.5m/sec and 28.0m/sec.

### (Light resistance)

The light resistance of the optical recording disks of Examples 1-13 was evaluated. Specifically, the disk jitter was measured after irradiation by a xenon lamp of 80,000 lux (Shimadzu Xenon Fade Meter) for 40 hours. As a result, there was no variation of jitter at all for any of the optical recording discs of Examples 1-13.

### (Reliability)

A reliability test of the optical recording discs of Examples 1-13 was performed under conditions of 80°C, 80% RH for 100 hours. As a result, there was no variation of properties for any of the optical recording discs of Examples 1-13.

## Claims

1. An optical recording material used in an optical recording medium which can record information by light irradiation, wherein said optical recording material contains a dye compound obtained by salt formation between a chelate compound formed by coordination between one metal and one or two compounds represented by the following general formula (1): 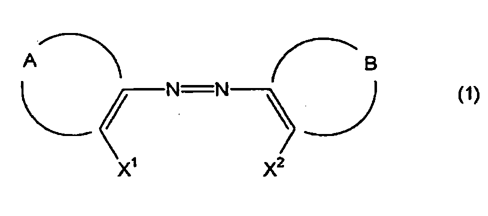 where A and B are groups of atoms which may be identical or different, and which respectively form aromatic rings, and X¹ and X² are respectively functional groups having one or more active hydrogen atoms which may contain a substituent group,
and a cation represented by the following general formula (2): 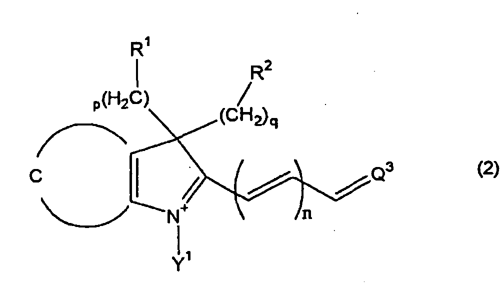 where C is a group of atoms forming a benzene ring or naphthalene ring which may have a substituent group, R¹ and R² are respectively five-membered rings or six-membered rings which may have a substituent group, Y¹ is a substituent group, Q³ is a nitrogen-containing heterocyclic ring which may contain a condensed ring, p and q are respectively integers from 1 to 4, and n is an integer from 0 to 3.

2. An optical recording material used in an optical recording medium which can record information by light irradiation, wherein said optical recording material contains a chelate compound formed by coordination between one metal and one or two compounds represented by the following general formula (1): 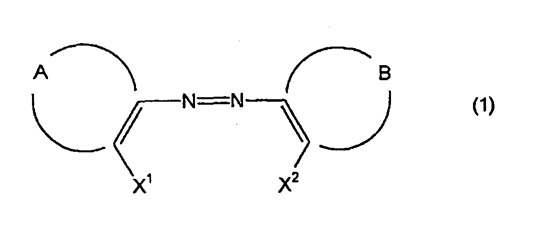 where A and B are groups of atoms which may be identical or different, and which respectively form aromatic rings, and X¹ and X² are respectively functional groups having one or more active hydrogen atoms which may contain a substituent group,
and a cation represented by the following general formula (2): 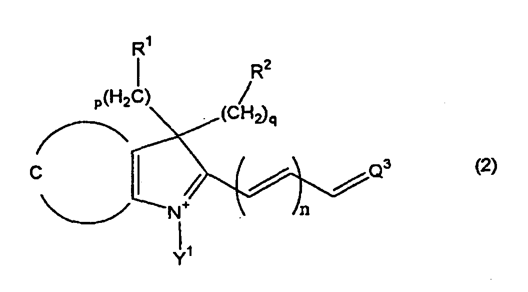 where C is a group of atoms forming a benzene ring or naphthalene ring which may have a substituent group, R¹ and R² are respectively five-membered rings or six-membered rings which may have a substituent group, Y¹ is a substituent group, Q³ is a nitrogen-containing heterocyclic ring which may contain a condensed ring, p and q are respectively integers from 1 to 4, and n is an integer from 0 to 3.

3. The optical recording material according to Claim 1 or 2, wherein said metal is a metal selected from a group consisting of vanadium, cobalt, nickel and copper.

4. The optical recording material according to Claim 1 or 2, further comprising a cyanine dye compound.

5. The optical recording material according to Claim 3, further comprising a cyanine dye compound.

6. An optical recording medium which can record information by light irradiation, wherein said optical recording medium comprises a recording layer containing a dye compound obtained by salt formation between a chelate compound formed by coordination between one metal and one or two compounds represented by the following general formula (1): 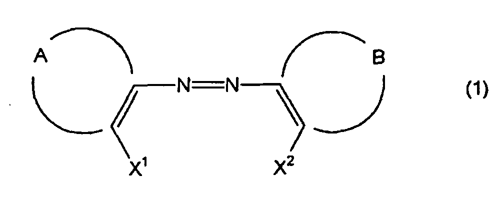 where A and B are groups of atoms which may be identical or different, and which respectively form aromatic rings, and X¹ and X² are respectively functional groups having one or more active hydrogen atoms which may contain a substituent group,
and a cation represented by the following general formula (2): 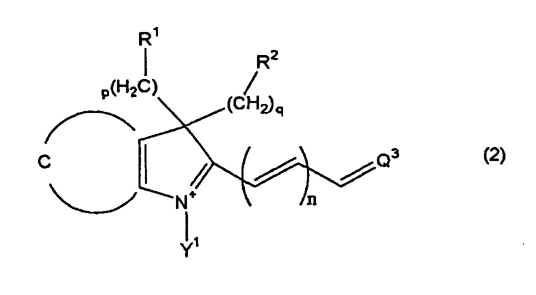 where C is a group of atoms forming a benzene ring or naphthalene ring which may have a substituent group, R¹ and R² are respectively five-membered rings or six-membered rings which may have a substituent group, Y¹ is a substituent group, Q³ is a nitrogen-containing heterocyclic ring which may contain a condensed ring, p and q are respectively integers from 1 to 4, and n is an integer from 0 to 3.

7. The optical recording medium according to Claim 6, wherein said metal is a metal selected from a group consisiting of vanadium, cobalt, nickel and copper.

8. The optical recording medium according to Claim 6, wherein said recording layer contains more moles of the cation represented by said general formula (2) than said chelete compound.

9. The optical recording medium according to Claim 6, wherein said recording layer further contains a cyanine dye compound.

10. The optical recording medium according to Claim 7, wherein said recording layer contains more moles of the cation represented by said general formula (2) than said chelete compound.

11. The optical recording medium according to Claim 7, wherein said recording layer further contains a cyanine dye compound.

12. The optical recording medium according to Claim 8, wherein said recording layer further contains a cyanine dye compound.

13. An optical recording medium which can record information by light irradiation, wherein said optical recording medium contains a chelate compound formed by coordination between one metal and one or two compounds represented by the following general formula (1): 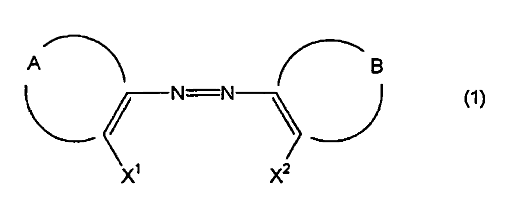 where A and B are groups of atoms which may be identical or different, and which respectively form aromatic rings, and X¹ and X² are respectively functional groups having one or more active hydrogen atoms which may contain a substituent group,
and a cation represented by the following general formula (2): 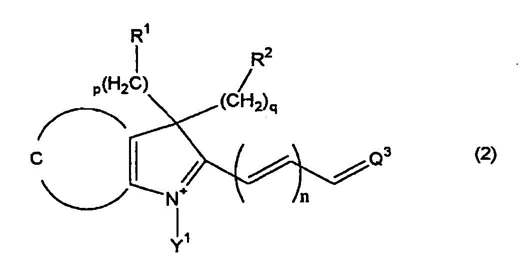 where C is a group of atoms forming a benzene ring or naphthalene ring which may have a substituent group, R¹ and R² are respectively five-membered rings or six-membered rings which may have a substituent group, Y¹ is a substituent group, Q³ is a nitrogen-containing heterocyclic ring which may contain a condensed ring, p and q are respectively integers from 1 to 4, and n is an integer from 0 to 3.

14. The optical recording medium according to Claim 13, wherein said metal is a metal selected from a group consisting of vanadium, cobalt, nickel and copper.

15. The optical recording medium according to Claim 13, wherein said recording layer contains more moles of the cation represented by said general formula (2) than said chelete compound.

16. The optical recording medium according to Claim 13, wherein said recording layer further contains a cyanine dye compound.

17. The optical recording medium according to Claim 14, wherein said recording layer contains more moles of the cation represented by said general formula (2) than said chelete compound.

18. The optical recording medium according to Claim 14, wherein said recording layer further contains a cyanine dye compound.

19. The optical recording medium according to Claim 15, wherein said recording layer further contains a cyanine dye compound.

20. The optical recording medium according to any of Claims 6-19, wherein said recording layer further contains a compound represented by the following general formula (3): 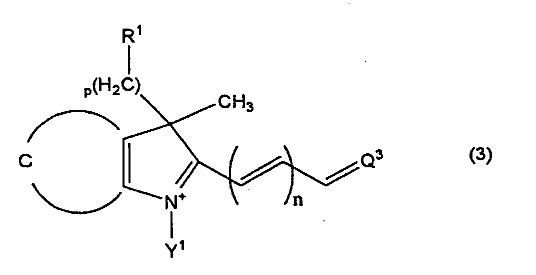 where C is a group of atoms forming a benzene ring or naphthalene ring which may have a substituent group, R¹ is a five-membered ring or six-membered ring which may have a substituent group, Y¹ is a substituent group, Q³ is a nitrogen-containing heterocyclic ring which may contain a condensed ring, p is an integer from 1 to 4, and n is an integer from 0 to 3.
